# EUROPÄISCHE PATENTSCHRIFT

(11) **EP 0 410 129 B1**
(45) Veröffentlichungstag und Bekanntmachung des Hinweises auf die Patenterteilung: **25.08.1993**
(21) Anmeldenummer: 90111502.2
(22) Anmeldetag: 19.06.1990
(51) Int. Cl.: B23C 5/24

(54) **Zerspanungswerkzeug**
Cutting tool
Outil de coupe

(30) Priorität: 26.07.1989 DE 8909060 U
(43) Veröffentlichungstag der Anmeldung: 30.01.1991
(73) Patentinhaber: Hermann Bilz GmbH & Co, 73730 Esslingen (DE)
(72) Erfinder: Braun, Harald, D-7300 Esslingen (DE)
(74) Vertreter: Kratzsch, Volkhard, Dipl.-Ing.

(56) Entgegenhaltungen:
- WO-A-90/05608
- DE-A- 3 242 765
- FR-A- 2 140 723

## Beschreibung

Die Erfindung bezieht sich auf ein Zerspanungswerkzeug mit den im Oberbegriff des Anspruchs 1 angegebenen Merkmalen.

Bei einem bekannten Zerspanungswerkzeug (DE-OS 23 63 902) ist die mindestens eine Schneidplatte über zwei zueinander etwa rechtwinklig stehende, drehverstellbare Exzenter mittelbar dadurch in den beiden vorgegebenen Richtungen verstellbar, daß die mindestens eine Schneidplatte im Plattenhalter, auch als Kassette bezeichnet, aufgenommen ist, der seinerseits über die beiden Exzenter in den genannten Richtungen verstellbar ist. Die beiden Exzenter sind in etwa V-förmigen Führungsnuten des Plattenhalters enthalten und stützen sich an ebenen Stützflächen des Grundkörpers ab. Durch Federn sollen die beiden Exzenter mit dem Plattenhalter verbunden sein, wobei die Federn als Ringfedern ausgebildet sind derart, daß jeder Exzenter zu Verstellzwecken gedreht werden kann. Die Federkraft der Federn soll so bemessen sein, daß der Exzenter seine Einstellage nicht verändert, wenn im ausgebauten Zustand kleinere Kräfte von außen auf den Exzenter wirken. Diese Sicherung der Exzenter in Achsrichtung ist unzulänglich. Die Exzenter können aus ihren V-förmigen Führungsnuten im Plattenhalter herausfallen. So werden die Exzenter z.B. dann frei, wenn der Plattenhalter vom Grundkörper demontiert wird, da die Exzenter nur höchstens etwa mit einer 180° Umfangswinkelerstreckung in die V-förmigen Führungsnuten eintauchen und daher bei der Demontage von selbst frei werden, zumal die Ringfedern im Eintauchbereich der Exzenter in die V-förmigen Führungsnuten nicht genügend Haltekraft entwickeln können. Somit sind also die Exzenter schon beim Lockern der Festspannung der Halteplatte am Grundkörper gegen Herausfallen gefährdet. Bereits dies verhindert oder beeinträchtigt zumindest eine schnelle und zuverlässige Einstellung des Werkzeuges. Von Nachteil ist ferner, daß die Verliersicherung durch Ringfedern fertigungstechnisch aufwendig und teuer ist. Bei jedem Exzenter müssen entsprechende Ringnuten für die Aufnahme der Ringfedern eingearbeitet werden, was einen großen Fertigungsaufwand bedeutet. Außerdem stellen die Ringfedern Einzelelemente dar, die ebenfalls Zusatzkosten bedingen. Es ergibt sich auch ein größerer Montageaufwand, da die Ringfedern in die zugeordneten Nuten der Exzenter eingesetzt werden müssen. Schließlich besteht die Gefahr, daß die Ringfedern im Laufe der Zeit erlahmen oder brechen.

Der Erfindung liegt die Aufgabe zugrunde, eine Zerspanungswerkzeug der im Oberbegriff des Anspruchs 1 genannten Art zu schaffen, das für zumindest einen Exzenter eine einfache, zuverlässige und kostengünstige Verliersicherung aufweist.

Die Aufgabe ist bei einem Zerspanungswerkzeug der im Oberbegriff des Anspruchs 1 genannten Art erfindungsgemäß durch die Merkmale im Kennzeichnungsteil des Anspruchs 1 gelöst.

Die umlaufende Nut am einen Exzenterende und der z.B. daran angepaßte Endabschnitt am anderen Exzenterende stellen einfache Elemente für den formschlüssigen Eingriff und für die Verliersicherung des einen Exzenters dar. Gesichert ist dadurch derjenige Exzenter, der die Nut enthält, da der in diese Nut quer eingreifende Endabschnitt des anderen Exzenters ein formschlüssiges Sicherungselement bildet, das diesen mit der Nut versehenen Exzenter formschlüssig gegen Verschiebung in Richtung seiner Längsachse sichert. Im Rahmen der Erfindung liegt natürlich auch eine entsprechende Sicherung derart, daß ein eigenständiges Teil, z.B. ein Vorsprung, Stift, Bolzen od.dgl., in die Nut am Ende des einen Exzenters eingreift, wobei dieser eigenständige Teil den Endabschnitt des anderen Exzenters bildet, an dem dieser Teil entweder gleich bei der Herstellung oder nachträglich, z.B. lösbar, angebracht ist. Als Nut kann ein relativ schmaler umlaufender Einschnitt ausreichend sein. Die Einschnittbreite ist dabei so gewählt, daß der Endabschnitt, der koaxial am Ende des anderen Exzenters vorspringt, auch dann noch in der Nut Platz findet, wenn dieser den Endabschnitt tragende Exzenter um seine Längsachse drehverstellt wird und in der Aufnahme des Grundkörpers und/oder des Plattenhalters quer zu seiner Längsachse mehr oder weniger stark versetzt wird. Oer den Endabschnitt tragende eine Exzenter kann in einfacher Weise innerhalb der Aufnahme dadurch verliersicher gehalten sein, daß das freie Ende der Aufnahme mit einer Blindkappe verschlossen wird, die ausreichend fest angeordnet ist. Es kann aber auch ausreichend sein, nach Einsetzen des Exzenters in die diesen aufnehmende Aufnahme endseitig einen Sicherungsring oder einen irgendwie gearteten Vorsprung vorzusehen, der quer hinter dem freien Stirnende dieses Exzenters in die Aufnahme hineinragt und den Exzenter am Herausrutschen aus der Aufnahme hindert. Je nach Einzelfall kann hierzu bereits ein geringfügiges Verstemmen des Wandungsbereiches am freien Ende der jeweiligen Aufnahme ausreichend sein. Somit ist erreicht, daß die beiden Exzenter mit je einem Ende aneinanderstoßen und formschlüssig ineinandergreifen. Durch diesen Formschluß ist für beide, oder zumindest für einen Exzenter, eine Verliersicherung gegeben, so daß der Exzenter daran gehindert ist, aus seiner Aufnahme herauszurutschen. Die Verliersicherung bleibt erhalten, auch wenn die im Grundkörper festgespannte Schneidplatte oder der eine daran befestigte Schneidplatte tragende, im Grundkörper festgespannte Plattenhalter zu Verstellzwecken gelockert wird. Auch während der Verstellung durch Drehen des einen oder anderen Exzenters bleibt dieser formschlüssige Eingriff beider Exzenterenden erhalten, und damit die so erreichte Verliersicherung für zumindest einen der beiden Exzenter. Von Vorteil ist ferner, daß der formschlüssige Eingriff beider Exzenterenden die Verstellung der Exzenter in keiner Weise behindert. Es sind keine besonderen zusätzlichen Einzelteile.für diese Verliersicherung notwendig. Die Anzahl der Bauteile ist somit reduziert. Mangels solcher besteht auch nicht die Gefahr, daß diese im Laufe der Zeit funktionsuntüchtig werden. Somit ist auf Dauer eine zuverlässige Verliersicherung für zumindest einen der beiden Exzenter gegeben. Diese benötigt auch keinen größeren zusätzlichen Fertigungsaufwand; denn die für den formschlüssigen Eingriff beider aneinanderstoßenden Exzenterenden notwendigen Teile lassen sich praktisch bei der Herstellung der Exzenter gleich mit einarbeiten. Da besondere Sicherungselemente in Form von zusätzlichen Einzelteilen entfallen, entfällt dafür auch ein zusätzlicher Montageschritt. Das Zerspanungswerkzeug ist also insgesamt kostengünstiger, einfacher zu montieren und ermöglicht eine schnelle, zuverlässige und leichte Einstellung durch Drehverstellung der einzelnen Exzenter. Die Drehverstellbarkeit ist besonders leichtgängig, da für die Verliersicherung des zumindest einen Exzenters keine Kräfte quer zwischen dem Exzenter einerseits und den Lagerstellen und Abstützflächen dieses andererseits benötigt werden, die zugleich durch erhöhte Reibkraft sonst die Leichtgängigkeit bei der Drehverstellung beeinträchtigen könnten. Somit ist durch die Erfindung auch eine besonders leichtgängige und somit feinfühlige Drehverstellbarkeit der Exzenter gewährleistet.

Vorteilhafte Ausgestaltungen der Erfindung ergeben sich aus den Ansprüchen 2 bis 16. In den Fällen,in denen die Aufnahmen für die Exzenter in dem Plattenhalter vorgesehen sind, können die Plattenhalter mit den Exzentern und mindestens einer daran zu befestigenden Schneidplatte als einbaufertige Einheit zusammenmontiert werden, ohne daß dabei der zumindest eine Exzenter aus dem Plattenhalter in Achsrichtung herauszufallen droht, da dies durch das verliersichernde Ineinandergreifen beider Exzenterenden verhindert ist. Der andere Exzenter kann dadurch gegen Herausrutschen aus der Aufnahme im Plattenhalter gesichert sein, daß hinter dem freien Ende des Exzenters irgendein Vorsprung in die Aufnahme im Plattenhalter quer vorspringt und diesen Exzenter gegen Herausrutschen in dieser einen Achsrichtung sichert. Ein Herausrutschen in gegensinniger Achsrichtung ist dadurch verhindert, daß dieser Exzenter mit seinem Endabschnitt im Stoßbereich am anderen Exzenter, insbesondere dessen Nut, anstößt. Die Erfindung ist für alle möglichen Formen und Aufbauten von Zerspanungswerkzeugen geeignet, ebenso auch für die unmittelbare Befestigung von Schneidplatten in zugehörigen Sitzen des Grundkörpers. Auch wenn die Erfindung anhand eines Plattenhalters, an dem mindestens eine Schneidplatte auswechselbar befestigt ist, verdeutlicht ist, versteht es sich gleichwohl, daß dieser besondere Plattenhalter auch entfallen und die mindestens eine Schneidplatte jeweils direkt über die Exzenter verstellt und am Grundkörper abgestützt werden kann. Erfolgt die Befestigung der Schneidplatten mittels Plattenhaltern, so versteht es sich, daß jeder Plattenhalter auch mehrere Schneidplatten aufnehmen kann.

Weitere Einzelheiten und Vorteile der Erfindung ergeben sich aus der nachfolgenden Beschreibung.

Der vollständige Wortlaut der Ansprüche ist vorstehend zur Vermeidung unnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand eines in den Zeichnungen gezeigten Ausführungsbeispieles näher erläutert. Es zeigen:
- Fig. 1: einen schematischen Schnitt mit teilweiser Seitenansicht eines Teils eines Zerspanungswerkzeuges mit daran mittelbar über einen Plattenhalter befestigter Schneidplatte,
- Fig. 2: eine schematische Vorderansicht allein des Plattenhalters,
- Fig. 3 und 4: jeweils eine schematische Ansicht in Pfeilrichtung III bzw. IV des Plattenhalters in Fig. 2 mit einer Spannschraube zum Befestigen dieser am Zerspanungswerkzeug,
- Fig. 5: eine Seitenansicht eines Exzenters des Zerspanungswerkzeuges in Fig. 1,
- Fig. 6: eine schematische Ansicht in Pfeilrichtung VI des Exzenters in Fig. 5, in demgegenüber wesentlich größerem Maßstab,
- Fig. 7: eine Seitenansicht des zweiten Exzenters der Zerspanungswerkzeuges,
- Fig. 8: eine schematische Ansicht in Pfeilrichtung VIII des Exzenters in Fig. 7, in demgegenüber wesentlich größerem Maßstab.

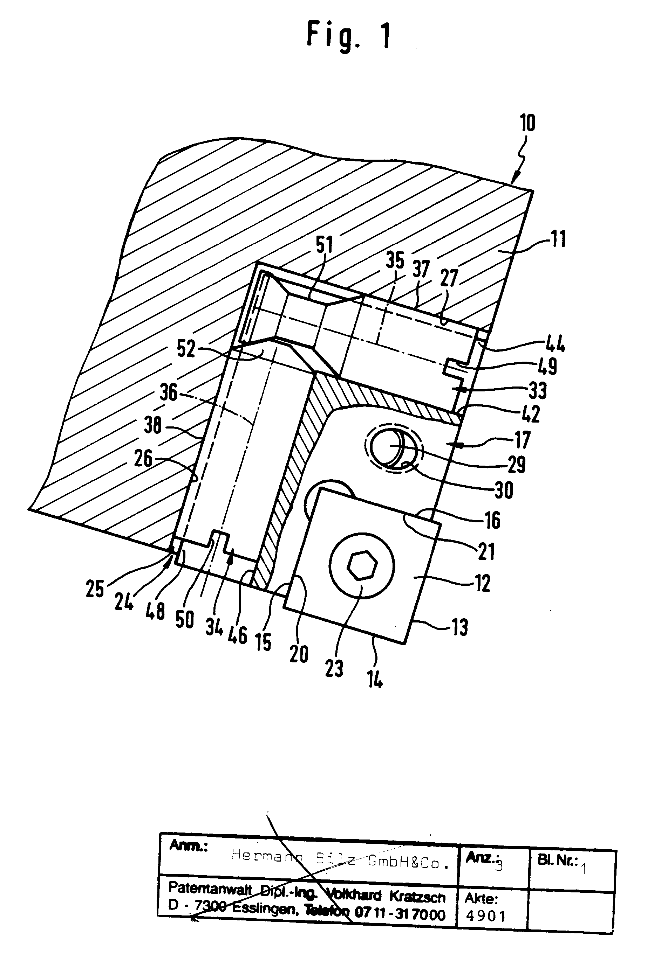

In Fig. 1 ist schematisch lediglich ein Teil eines Zerspanungswerkzeuges 10 gezeigt, das beliebig ausgebildet sein kann, z.B. als Bohrwerkzeug, insbesondere dabei als Senkwerkzeug, als Fräswerkzeug, als Reibwerkzeug od.dgl. gestaltet sein kann, wobei jedes Werkzeug einschneidig oder auch mehrschneidig ausgebildet sein kann. Die Erfindung kann bei jeder Art Zerspanungswerkzeug 10 Anwendung finden und ist nicht auf einen besonderen Typus dieses Werkzeuge eingeschränkt, weswegen es letztlich nicht auf die spezielle Ausbildung des Zerspanungswerkzeuges 10 ankommt.

Das Zerspanungswerkzeug 10 hat einen Grundkörper 11, der z.B. mehrere einzelne Schneidplatten 12 aufweist, die am Grundkörper 11 einstellbar und feststellbar angebracht sind. Beim gezeigten Ausführungsbeispiel ist nur eine Schneidplatte 12 zu sehen, die bei diesem etwa quadratisch ausgebildet ist, wobei an allen vier Seiten jeweils Schneiden 13 - 16 ausgebildet sind, so daß die Schneidplatte 12 als sogenannte Wendeschneidplatte bedarfsweise so plaziert werden kann, daß die eine oder andere Schneide 13 - 16 für die zerspanende Bearbeitung wirksam ist.

Beim gezeigten Ausführungsbeispiel ist die Schneidplatte 12 an einem ihr eigenen Plattenhalter 17, auch als Kassette bezeichnet, befestigt. Der Plattenhalter 17 ist etwa rechteckig und zu diesem Zweck im Bereich einer Ecke mit einem stufenförmig eingetieften Sitz 18 versehen, der eine Grundfläche 19 und zwei zueinander z.B. rechtwinklig verlaufende Seitenflächen 20 und 21 aufweist. Die im Sitz 18 plazierte Schneidplatte 12 liegt somit mit ihrer Rückenfläche flächig an der Grundfläche 19 an und mit zwei Seiten an den Seitenflächen 20 und 21, so daß ein definierter und fester Sitz gewährleistet ist. Im Bereich des Sitzes 18 enthält der Plattenhalter 17 eine Gewindebohrung 22, in die eine Befestigungsschraube 23, z.B. Torxschraube, eingeschraubt ist, die die Schneidplatte 12 durchsetzt und darin mit ihrem Kopf versenkt aufgenommen sein kann.

Der Plattenhalter 17 ist seinerseits in einem zugeordneten und passenden Sitz 24 des Grundkörpers 11 einstellbar und feststellbar gehalten, wie bei derartigen Zerspanungswerkzeugen 10 bekannt ist. Einzelheiten des Sitzes 24 im Grundkörper 11 bedürfen daher keiner besonderen Beschreibung. Der Sitz 24 hat eine Grundfläche 25 und zwei z.B. etwa rechtwinklig zueinander verlaufende, von der Grundfläche 25 hochragende seitliche Stützflächen 26 und 27, die z.B. ebenflächig ausgebildet sind. Im Bereich des Sitzes 24 befindet sich eine schräge Durchgangsbohrung 28, durch die eine Spannschraube 29 rückseitig hindurchgreifen kann, die dann von der Rückseite des Plattenhalters 17 her in eine in letzterem enthaltene Gewindebohrung 30 eingreifen und beim Anziehen somit den Plattenhalter 17 mit seiner Rückseite fest gegen die Grundfläche 25 und dabei auch in Querrichtung gegen die Stützflächen 26,27 anziehen kann. Die Gewindebohrung 30 im Plattenhalter 17 hat den gleichen Schrägverlauf wie die Durchgangsbohrung 28. Letztere kann auf der Seite, die dem Plattenhalter 17 abgewandt ist, mit einer Einsenkung 31 zur Aufnahme des Kopfes 32 der Spannschraube 29 versehen sein. Aufgrund dieser rückseitigen Befestigung des Plattenhalters 17 im Sitz 24 befindet sich der Kopf 32 der Spannschraube 29 nicht im Brustbereich und dort, wo bei der zerspanenden Bearbeitung die Späne anfallen. Der Kopf 32 ist dadurch gegen Beschädigung und Zusetzen seiner Werkzeugangriffsfläche mit Spänen od.dgl. geschützt. Außerdem hat diese rückseitige Befestigung über die Gewindebohrung 30 im Plattenhalter 17 den Vorteil, daß der Plattenhalter 17 dadurch kleiner gehalten werden kann; denn die zu dieser Befestigung mittels der Spannschraube 29 z.B. größere Durchgangsbohrung 28 und die für die Aufnahme des Kopfes 32 bestimmte Einsenkung 31 befinden sich im Grundkörper 11 und nicht im Plattenhalter 17, was sonst im Plattenhalter 17 mehr Platz erfordert und zu größerer Bauweise des Plattenhalters 17 schon aus diesen Gründen zwingt.

Es versteht sich gleichwohl, daß bei einem anderen, nicht gezeigten Ausführungsbeispiel die Verhältnisse auch vertauscht, wie angesprochen, sein können, so daß also die Spannschraube 29 eine Durchgangsbohrung im Plattenhalter 17 durchsetzt und in eine im Grundkörper 11 enthaltene Gewindebohrung eingeschraubt ist.

Bei einem anderen, nicht gezeigten Ausführungsbeispiel entfällt der Plattenhalter 17 (Kassette) zur Befestigung der Schneidplatte 12. Statt dessen ist die Schneidplatte 12 unmittelbar in einem ihrer Größe entsprechenden Sitz des Grundkörpers 11 aufgenommen, analog der gezeigten Aufnahme des Plattenhalters 17 im Sitz 24. Dabei ist die Schneidplatte 12 entweder unmittelbar mittels einer Befestigungsschraube 23, die in eine Gewindebohrung im Grundkörper 11 eingreift, befestigt oder es ist eine Spannplatte vorgesehen, die am Grundkörper 11 abgestützt und daran mit einer Befestigungsschraube festgespannt ist und auf die Schneidplatte 12 drückt und diese in ihrem Sitz im Grundkörper 11 festhält . Auch solche Befestigungen der Schneidplattel 12 direkt in einem zugeordneten Sitz im Grundkörper 11 sind für sich bekannt. Auch diese liegen im Rahmen der Erfindung - auch wenn weitere Details dazu am gezeigten Beispiel der Befestigung mittels des Plattenhalters 17 erläutert sind.

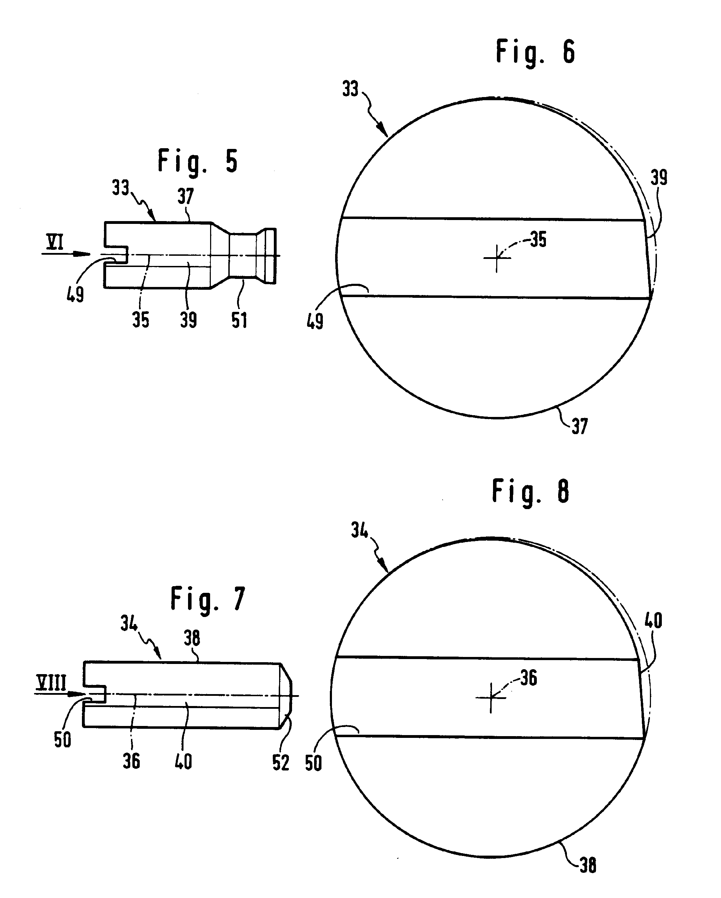

Das Zerspanungswerkzeug 10 weist zwei bolzenförmige Exzenter 33 und 34 auf, die quer zueinander gerichtet sind, insbesondere etwa rechtwinklig zueinander stehen. Jeder Exzenter 33, 34 ist um seine Längsachse 35 bzw. 36 drehverstellbar und ist einerseits am Grundkörper 11 und andererseits am Plattenhalter 17 abgestützt. Es versteht sich, daß bei dem angesprochenen, nicht gezeigten Ausführungsbeispiel, bei dem jede Schneidplatte 12 direkt in einem zugeordneten Sitz im Grundkörper 11 gehalten ist, jeder Exzenter 33, 34 dann, statt am Plattenhalter 17, direkt seitlich an der Schneidplatte 12 anliegt, so daß diese über den jeweiligen Exzenter 33, 34 am Grundkörper 11 abgestützt ist. Der Begriff "Exzenter" beinhaltet jede mögliche Ausgestaltung derart, daß bei einer Drehbetätigung um die Längsachse 35 bzw. 36 in der einen oder anderen Richtung der radiale Abstand der äußeren Umfangsfläche 37 bzw. 38 von der Längsachse 35 bzw. 36 zunimmt bzw. abnimmt. Die Exzentrizität kann z.B. schon durch eine Abflachung 39 bzw. 40 der Umfangsfläche 37 bzw. 38 erreicht sein. Statt dessen oder zusätzlich dazu kann die Exzentrizität dadurch verwirklicht sein, daß die äußere Umfangsfläche 37 bzw. 38 jedes Exzenters 33 bzw. 34 z.B. einer Spirale folgt, wie in Fig. 6 bzw. 8 durch die vergrößerte Darstellung sichtbar gemacht ist. Der Hüllkreis ist dabei strichpunktiert gezeigt.

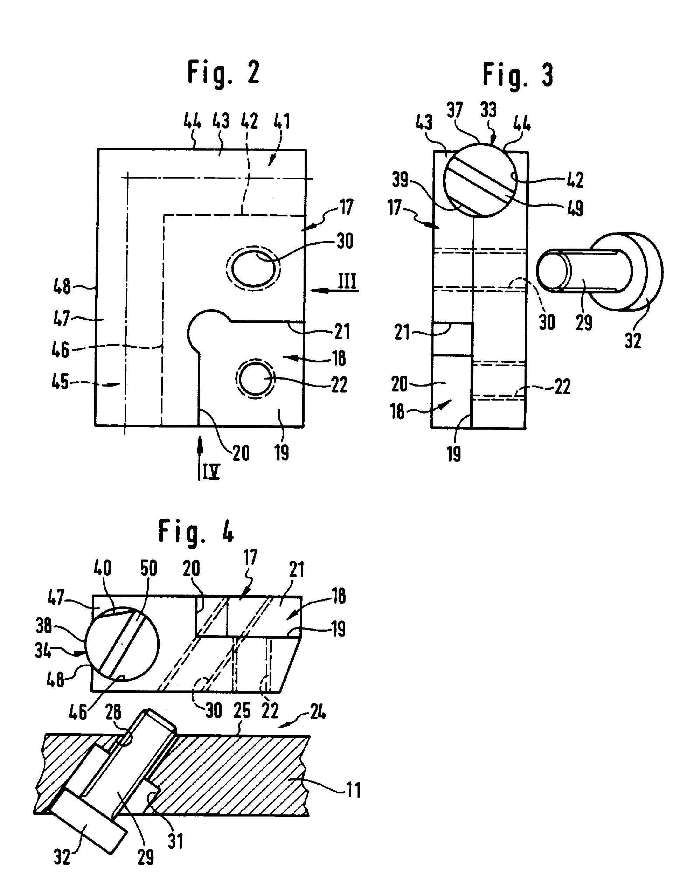

Der eine Exzenter 33 lagert innerhalb einer zugeordneten Aufnahme 41 am in Fig. 1 und 2 oberen Randbereich des Plattenhalters 17. Die Aufnahme 41 ist z.B. als Bohrung 42, die durchgehend verläuft, ausgebildet, wobei deren Wandung 43, die zur Stützfläche 27 hinweist, über einen durchlaufenden Schlitz 44 derart geöffnet ist, daß der zugeordnete Exzenter 33 mit einem Umfangsteil durch den Schlitz 44 hindurch nach außen überstehen und an der Stützfläche 27 anliegen kann. In analoger Weise ist der andere Exzenter 34 ebenfalls im Plattenhalter 17 in einer zugeordneten Aufnahme 45 gelagert, die als Bohrung 46 ausgebildet ist, wobei in der Wandung 47, die der Stützfläche 26 zugewandt ist, ein durchlaufender Schlitz 48 enthalten ist, über den die Bohrung 46 zur Stützfläche 26 hin derart geöffnet ist, daß der zugeordnete Exzenter 34 mit einem Umfangsteil durch den Schlitz 48 hindurch nach außen überstehen und an der Stützfläche 26 anliegen kann. Die Breite jedes Schlitzes 44 bzw. 48 ist kleiner als 180° Umfangswinkel und so gewählt, daß der darin aufgenommene Exzenter 33 bzw. 34 in Richtung quer zur Bohrung 42 bzw. 46 verliersicher gehalten ist. Da der jeweilige Schlitz 44 bzw. 48 am der Stützfläche 27 bzw. 26 zugeordneten und zugewandten Randbereich vorgesehen ist, ist gewährleistet, daß der jeweilige Exzenter 33 bzw. 34 auf zumindest einem Teil seiner Länge mit einem aus der Bohrung 42 bzw. 46 herausstehenden und überstehenden Teil an dieser Stützfläche 27 bzw. 26 des Grundkörpers 11 abgestützt ist. Auf der gegenüberliegenden Seite steht der jeweilige Exzenter 33 bzw. 34 mit der inneren Umfangsfläche der Bohrung 42 bzw. 46 in Anlageberührung, so daß dort die auf den Plattenhalter 17 von außen her wirkenden Kräfte aufgenommen und abgestützt und über den jeweiligen Exzenter 33 bzw. 34 zum Grundkörper 11 geleitet werden.

Beide Exzenter 33, 34 verlaufen z.B. etwa rechtwinklig zueinander. Dabei kann je nach Plazierung des Plattenhalters 17 im Grundkörper 11 der eine Exzenter 33 der z.B. axialen Verstellung und der andere Exzenter 34 der z.B. radialen Verstellung des Plattenhalters 17 - und damit auch der Schneidplatte 12 - dienen. Jeder bolzenförmige Exzenter 33, 34 ist am einen Ende, das von außen erreichbar ist, mit einer Werkzeugangriffsfläche 49 bzw. 50, z.B. mit einem Schlitz, versehen, an der zur Drehverstellung ein geeignetes Werkzeug, z.B. ein Schraubendreher, angreifen kann.

Soll die am Plattenhalter 17 befestigte Schneidplatte 12 durch Verstellen des Plattenhalters 17 verstellt werden, z.B. in Richtung der Längsachse 36, so braucht dazu die Spannschraube 29 nicht gelockert zu werden, sondern es kann gleich z.B. mit einem Schraubendreher in den Schlitz 49 des Exzenters 33 eingegriffen und dieser in entsprechender, sinnfälliger Weise um seine Längsachse 35 gedreht werden, mit z.B. zunehmender Exzentrizität seiner äußeren Umfangsfläche 37, bezogen auf die Längsachse 35. Dadurch wird der Plattenhalter 17 mitsamt der daran festen Schneidplatte 12 entlang der Stützfläche 26 verschoben. Aufgrund der wirkenden Selbsthemmung ist der Exzenter 33 daran gehindert, sich selbsttätig in ungewünschter Weise um seine Längsachse 35 zu verstellen, so daß die vorgenommene Einstellung erhalten bleibt.

Soll zusätzlich dazu oder statt dessen eine Verstellung etwa parallel zur Längsachse 35 erfolgen, wird analog vorgegangen und dabei der andere Exzenter 34 um seine Längsachse 36 in gewünschtem Maße verstellt. Bei allen Verstellungen versteht es sich, daß diese z.B. zum Ausgleich von Fertigungstoleranzen im Zehntelbereich liegen können, statt dessen aber auch je nach Einsatzzweck in kleineren oder größeren Maßbereichen liegen können. Dies hängt letztlich von der Größe der je Exzenter 33, 34 gewählten Exzentrizität ab.

Beim gezeigten und beschriebenen Ausführungsbeispiel ist jede Stützfläche 26, 27 des Grundkörpers 11, die dem Exzenter 34 bzw. 33 zugeordnet ist, als ebene Fläche ausgebildet. Bei einem anderen, nicht gezeigten Ausführungsbeispiel kann diese Stützfläche 26,27 auch als z.B. bogenförmige, eingetiefte Nut ausgebildet sein. Ferner kann bei einem anderen, nicht gezeigten Ausführungsbeispiel jeder Exzenter 33,34 so, wie für den gezeigten Plattenhalter 17 beschrieben ist, innerhalb einer Aufnahme, z.B. Bohrung, lagern, die statt in dem Plattenhalter 17 im Grundkörper 11 und dort im Bereich der Stützflächen 26,27 vorgesehen ist. Dann enthält diese Bohrung zweckmäßigerweise jeweils einen durchgängigen Schlitz, durch den hindurch der jeweilige darin aufgenommene Exzenter 33,34 in Richtung zum Plattenhalter 17 überstehen kann. Bei dieser Variante ist der Plattenhalter 17 vereinfacht, da dieser keine Bohrungen 42, 46 für die Exzenter 33, 34 enthält, weil diese Bohrungen in den Grundkörper 11 verlagert sind. Als Stützflächen, an denen sich dann die Exzenter 33, 34 im Bereich des Plattenhalters 17 abstützen können, können unter Umständen ebene Flächen an den zugeordneten Seiten des Plattenhalters 17 ausreichend sein. Statt dessen können diese Flächen auch mit einer z.B. bogenförmigen eingetieften Nut versehen sein. Bei diesem beschriebenen, nicht gezeigten Ausführungsbeispiel handelt es sich somit um im Prinzip die gleiche Anordnung, bei der lediglich eine Vertauschung vorgenommen ist. Es versteht sich, daß auch für dieses nicht gezeigte Ausführungsbeispiel der Plattenhalter 17 entfallen und die Schneidplatte 12 unmittelbar in einem zugeordneten Sitz im Grundkörper 11 befestigt sein kann, wobei dann die in Bohrungen des Grundkörpers 11 lagernden Exzenter 33, 34 unmittelbar an den zugeordneten Seiten der Schneidplatte 12 anliegen und diese direkt am Grundkörper 11 abstützen.

Eine weitere Besonderheit des Zerspanungswerkzeuges 10 liegt darin, daß die beiden Exzenter 33, 34 mit jeweils einem Ende aneinanderstoßen und dabei formschlüssig ineinander greifen. Beide Exzenter 33, 34 bilden zusammen eine verliersichere Halterung für einen von beiden Exzentern, beim gezeigten Ausführungsbeispiel für den in Fig. 1 oben befindlichen Exzenter 33. Dieser Exzenter 33 ist am einen Ende, das der Werkzeugangriffsfläche 49 gegenüberliegt, mit einer zweckmäßigerweise umlaufenden Nut 51 versehen, in die im Stoßbereich ein Endabschnitt 52 des anderen Exzenters 34 unter formschlüssiger Sicherung des Exzenters 33 in Richtung seiner Längsachse 35 eingreift. Die Nut 51 ist im Querschnitt etwa V-förmig. Sie kann statt dessen auch etwa U-förmig oder etwa bogenförmig sein. Der Endabschnitt 52 des Exzenters 34 verjüngt sich zum freien Ende hin. Er kann in Anpassung an den Querschnitt der Nut 51 gestaltet sein. Beim gezeigten Ausführungsbeispiel ist der Endabschnitt 52 etwa kegelstumpfförmig. Es kann von Vorteil sein, wenn der Endabschnitt 52 im wesentlichen formgleich mit dem Querschnitt der Nut 51 ist.

Beim gezeigten Ausführungsbeispiel ist die Anordnung so getroffen, daß der eine Exzenter 33, der die Nut 51 enthält, in bezug auf eine nicht dargestellte Längsmittelachse des Grundkörpers 11 z.B. etwa radial gerichtet und gegen die Fliehkraftwirkung beim Umlauf des Zerspanungswerkzeuges 10 mittels des anderen Exzenters 34 verliersicher gehalten ist. Im Einzelfall hängt dies von der Detailgestaltung des jeweiligen Zerspanungswerkzeuges 10 ab.

## Patentansprüche

1. Zerspanungswerkzeug, mit einem Grundkörper (11), in dem unmittelbar oder - über einen Plattenhalter (17) - mittelbar zumindest eine Schneidplatte (12) einstellbar und feststellbar angeordnet ist, die in einer Richtung sowie in einer zweiten, dazu quer verlaufenden Richtung an je einem Exzenter (33,34) abgestützt ist, der seinerseits am Grundkörper (11) abgestützt ist und um seine Längsachse (35, bzw. 36) drehverstellbar ist, **dadurch gekennzeichnet**, daß ein Exzenter (33) am einen Ende eine umlaufende Nut (51) enthält, in die im Stoffbereich ein Endabschnitt (52) des anderen Exzenters (34) unter formschlüssiger Sicherung des einen Exzenters (33) in dessen Längsrichtung (35) eingreift, so daß die beiden Exzenter (33, 34) mit je einem Ende aneinanderstoßen und formschlüssig ineinandergreifen.

2. Zerspanungswerkzeug nach Anspruch 1, **dadurch gekennzeichnet**, daß die beiden Exzenter (33,34) zusammen eine verliersichere Halterung bilden.

3. Zerspanungswerkzeug nach Anspruch 1, **dadurch gekennzeichnet**, daß die Nut (51) im Querschnitt etwa U-förmig oder V-förmig ist.

4. Zerspanungswerkzeug nach Anspruch 1 oder 3, **dadurch gekennzeichnet**, daß der Endabschnitt (52) des anderen Exzenters (34) sich zum freien Ende hin verjüngt.

5. Zerspanungswerkzeug nach einem der Ansprüche 1 - 4, **dadurch gekennzeichnet**, daß der Endabschnitt (52) des anderen Exzenters (34) etwa kegelstumpfförmig gestaltet ist.

6. Zerspanungswerkzeug nach einem der Ansprüche 1 - 5, **dadurch gekennzeichnet**, daß der Endabschnitt (52) des anderen Exzenters (34) im wesentlichen formgleich mit dem Querschnitt der Nut (51) ist.

7. Zerspanungswerkzeug nach einem der Ansprüche 1 - 6, **dadurch gekennzeichnet**, daß bei zumindest einem Exzenter (33,34) ein wesentlicher Längenabschnitt mit seiner Auffenfläche (37 bzw. 38) in Umfangsrichtung etwa einer Spirale folgt und dadurch die Exzentrizität geschaffen ist.

8. Zerspanungswerkzeug nach einem der Ansprüche 1 - 7, **dadurch gekennzeichnet**, daß die Exzenter (33,34) als bolzen mit Werkzeugangriffsfläche (49 bzw. 50) an dem Ende ausgebildet sind, das dem Stoßbereich gegenüberliegt.

9. Zerspanungswerkzeug nach einem der Ansprüche 1 - 8, **dadurch gekennzeichnet**, daß zumindest einer der beiden Exzenter (33,34) auf seiner Auffenfläche (37 bzw. 38) eine Abflachung (39 bzw. 40) aufweist.

10. Zerspanungswerkzeug nach einem der Ansprüche 1 - 9 , **dadurch gekennzeichnet**, daß jeder Exzenter-(33,34) innerhalb einer zugeordneten Aufnahme des Grundkörpers (11), z.B. in einer Bohrung, lagert und auf zumindest einem Teil seiner Länge die daran anliegende Schneidplatte (12) oder einen daran anliegenden Plattenhalter (17), der eine Schneidplatte (12) trägt, abstützt.

11. Zerspanungswerkzeug nach einem der Ansprüche 1 - 10 , **dadurch gekennzeichnet**, daß jeder Exzenter (33,34) innerhalb einer zugeordneten Aufnahme (41 bzw. 45) eines Plattenhalters (17), der eine Schneidplatte (12) trägt, lagert und auf zumindest einem Teil seiner Länge mit einem aus der Aufnahme (41 bzw. 45) heraus- und überstehenden Teil an einer Stützfläche (27 bzw. 26), z.B. innerhalb einer zugeordneten Aufnahme, des Grundkörpers (11) abgestützt ist.

12. Zerspanungswerkzeug nach Anspruch 11, **dadurch gekennzeichnet**, daß die Aufnahme (41,45) des Plattenhalters (17) für jeden Exzenter (33 bzw. 34) als Bohrung (42 bzw. 46) ausgebildet ist, deren Wandung (43 bzw. 47) auf einer Seite, die der Stützfläche (27 bzw. 26) des Grundkörpers (11) zugewandt ist, über einen durchlaufenden Schlitz (44 bzw. 48) derart geöffnet ist, daß der zugeordnete Exzenter (33 bzw. 34) mit einem Umfangsteil durch den Schlitz (44 bzw. 48) hindurch nach außen überstehen kann.

13. Zerspanungswerkzeug nach Anspruch 12, **dadurch gekennzeichnet**, daß die Breite jedes Schlitzes (44 bzw. 48) kleiner als 180° Umfangswinkel und derart gewählt ist, daß der zugeordnete Exzenter (33 bzw. 34) quer zur Bohrung (42 bzw. 46) verliersicher darin gehalten ist.

14. Zerspanungswerkzeug nach einem der Ansprüche 1 - 13, **dadurch gekennzeichnet**, daß der Plattenhalter (17), der eine Schneidplatte (12) trägt, in Abstand vom Sitz (18) für die Schneidplatte (12) eine vorzugsweise schräg verlaufende Gewindebohrung (30) enthält, in die eine Spannschraube (29) zum Festspannen des Plattenhalters (17) am Sitz (24) des Grundkörpers (11) eingreift, die eine Durchgangsbohrung (28) im Grundkörper (11) durchsetzt.

15. Zerspanungswerkzeug nach Anspruch 14, **dadurch gekennzeichnet**, daß die Spannschraube (29) von der Rückseite des Plattenhalters (17) her in dessen Gewindebohrung (30) eingreift.

16. Zerspanungswerkzeug nach einem der Ansprüche 1 - 15, **dadurch gekennzeichnet**, daß die beiden Exzenter (33,34) etwa rechtwinklig zueinander verlaufen und daß der eine Exzenter (33), der die Nut (51) enthält, in bezug auf die Längsmittelachse des Grundkörpers (11) etwa radial gerichtet und gegen die Fliehkraftwirkung mittels des anderen Exzenters (34) verliersicher gehalten ist und der etwa axialen Verstellung dient, während der andere Exzenter (34) der etwa radialen Verstellung dient.

## Claims

1. Cutting tool, comprising a basic body (11), in which at least one cutting plate (12) is disposed, adjustable and fixable, either directly or indirectly via a plate holder (17), which (cutting plate) is supported in one direction and in a second direction transversely thereto against an eccentric (33, 34) each, which in turn is supported against the basic body (11) and is rotatably adjustable about its longitudinal axis (35, 36 respectively), characterized in that one eccentric (33) contains, at one end, a circumferential groove (51), into which an end portion (52) of the other eccentric (34) engages in the joint region with form-fitting securing of the one eccentric (33) in its longitudinal direction (35), so that the two eccentrics (33, 34) abut against each other and form-fittingly engage each other at one end each.

2. Cutting tool according to Claim 1, characterized in that the two eccentrics (33, 34) together form a keeper mechanism.

3. Cutting tool according to Claim 1, characterized in that the groove (51) is generally U-shaped or V-shaped in cross-section.

4. Cutting tool according to Claim 1 or 3, characterized in that the end portion (52) of the other eccentric (34) tapers towards its free end.

5. Cutting tool according to one of Claims 1 to 4, characterized in that the end portion (52) of the other eccentric (34) is generally shaped as a truncated cone.

6. Cutting tool according to one of Claims 1 to 5, characterized in that the end portion (52) of the other eccentric (34) is basically of the same shape as the cross-section of the groove (51).

7. Cutting tool according to one of Claims 1 to 6, characterized in that, in the case of at least one eccentric (33, 34), a substantial longitudinal portion follows, with its outer surface (37, 38 respectively), approximately a spiral in the circumferential direction and the eccentricity is thereby created.

8. Cutting tool according to one of Claims 1 to 7, characterized in that the eccentrics (33, 34) are formed as bolts having a tool engagement surface (49, 50 respectively) at the end which is remote from the joint region.

9. Cutting tool according to one of Claims 1 to 8, characterized in that at least one of the two eccentrics (33, 34) possesses, on its outer surface (37, 38 respectively) a flattened zone (39, 40 respectively).

10. Cutting tool according to one of Claims 1 to 9, characterized in that each eccentric (33, 34) is journalled inside an associated seating of the basic body (11), e.g. in a bore, and over at least a portion of its length supports the cutting plate (12) bearing against it or a plate holder (17),which carries a cutting plate (12), bearing against it.

11. Cutting tool according to one of Claims 1 to 10, characterized in that each eccentric (33, 34) is journalled inside an associated seating (41, 45 respectively) of a plate holder (17) which carries a cutting plate (12) and, over at least a portion of its length, bears with a part of itself projecting out of and beyond the seating (41, 45 respectively) against a support surface (27, 26 respectively), e.g. inside an associated seating, of the basic body (11).

12. Cutting tool according to Claim 11, characterized in that the seating (41, 45) of the plate holder (17) for each eccentric (33, 34 respectively) is formed as a bore (42, 46 respectively), the wall (43, 47 respectively) of which, on a side which is towards the support surface (27, 26 respectively) of the basic body (11), is open along a continuous slit (44, 48 respectively) in such a manner that the associated eccentric (33, 34 respectively) can project outwards with a portion of its circumference through the slit (44, 48 respectively).

13. Cutting tool according to Claim 12, characterized in that the width of each slit (44, 48 respectively) is smaller than 180° angle of circumference and is chosen in such a manner that the associated eccentric (33, 34 respectively) is held transversely to the bore (42, 46 respectively) secure against escape.

14. Cutting tool according to one of Claims 1 to 13, characterized in that the plate holder (17), which carries a cutting plate (12), contains, at a distance from the seating (18) for the cutting plate (12), a preferably obliquely extending threaded bore (30), into which a tightening screw (29) for tightening the plate holder (17) onto the seating (24) of the basic body (11) engages, which screw passes through a through bore (28) in the basic body (11).

15. Cutting-tool according to Claim 14, characterized in that the tightening screw (29) engages from the rear face of the plate holder (17) into its threaded bore (30).

16. Cutting tool according to one of Claims 1 to 15, characterized in that the two eccentrics (33, 34) extend approximately perpendicularly to each other and that the one eccentric (33), which contains the groove (51), is orientated generally radially relative to the longitudinal central axis of the basic body (11) and is secured against escape due to centrifugal force by means of the other eccentric (34) and serves for the generally axial adjustment, whereas the other eccentric (34) serves for the generally radial adjustment.

## Revendications

1. Outil d'usinage par enlèvement de copeaux, comprenant un corps de base (11) dans lequel est disposée au moins une plaquette de coupe (12) pouvant être réglée directement ou indirectement - par l'intermédiaire d'un support de plaquette (17) - qui est maintenue dans une direction ainsi que dans une deuxième direction orientée transversalement par rapport à cette dernière, sur respectivement un excentrique (33, 34) lequel s'appuie à son tour sur le corps de base (11) et peut être tourné autour de son axe longitudinal (35 et respectivement 36), **caractérisé en ce** qu'un excentrique (33) présente à l'une de ses extrémités une rainure circulaire (51) dans laquelle s'engage, dans la zone de contact, une section terminale (52) de l'autre excentrique (34), avec blocage à engagement positif de l'excentrique (33) dans le sens de son axe longitudinal (35), de sorte que les deux excentriques (33, 34) se touchent avec respectivement une extrémité et s'emboîtent à engagement positif.

2. Outil d'usinage par enlèvement de copeaux selon la revendication 1, caractérisé en ce que les deux excentriques (33, 34) forment ensemble une fixation imperdable.

3. Outil d'usinage par enlèvement de copeaux selon la revendication 1, caractérisé en ce que la section transversale de la rainure (51) présente sensiblement une forme en U ou en V.

4. Outil d'usinage par enlèvement de copeaux selon l'une des revendications 1 ou 3, caractérisé en ce que la section terminale (52) de l'autre excentrique (34) se rétrécit en direction de l'extrémité libre.

5. Outil d'usinage par enlèvement de copeaux selon l'une des revendications 1 à 4, caractérisé en ce que la section terminale (52) de l'autre excentrique (34) présente sensiblement une forme tronconique.

6. Outil d'usinage par enlèvement de copeaux selon l'une des revendications 1 à 5, caractérisé en ce que la section terminale (52) de l'autre excentrique (34) présente sensiblement la même forme que la section transversale de la rainure (51).

7. Outil d'usinage par enlèvement de copeaux selon l'une des revendications 1 à 6, caractérisé en ce que, dans le sens circonférentiel, une section longitudinale essentielle d'au moins l'un des excentriques (33, 34), suit sensiblement une spirale avec sa surface extérieure (37 et respectivement 38), créant ainsi l'excentricité.

8. Outil d'usinage par enlèvement de copeaux selon l'une des revendications 1 à 7, caractérisé en ce que les excentriques (31, 34) sont conformés en boulons dont l'extrémité opposée à la zone de contact est munie d'une surface d'attaque (49 et respectivement 50) pour la mise en place d'un outil.

9. Outil d'usinage par enlèvement de copeaux selon l'une des revendications 1 à 8, caractérisé en ce qu'au moins l'un des deux excentriques (33, 34) présente sur sa surface extérieure (37 et respectivement 38) un méplat (39 et respectivement 40).

10. Outil d'usinage par enlèvement de copeaux selon l'une des revendications 1 à 9, caractérisé en ce que chaque excentrique (33, 34) est placé à l'intérieur d'un logement associé du corps de base (11), par exemple dans un alésage, et maintient sur au moins une partie de sa longueur la plaquette de coupe (12) ou un support de plaquette (17) portant une plaquette de coupe (12) qui y est appliqué.

11. Outil d'usinage par enlèvement de copeaux selon l'une des revendications 1 à 10, caractérisé en ce que chaque excentrique (33, 34) est placé à l'intérieur d'un logement associé (41 et respectivement 45) d'un support de plaquette (17) portant une plaquette de coupe (12), et maintenu sur au moins une partie de sa longueur, avec une partie dépassant du logement (41 et respectivement 45), sur une surface d'appui (27 et respectivement 26) du corps de base (11), par exemple à l'intérieur d'un logement associé.

12. Outil d'usinage par enlèvement de copeaux selon la revendication 11, caractérisé en ce que le logement (41, 45) du support de plaquette (17) est réalisé pour chaque excentrique (33 et respectivement 34) sous la forme d'un alésage (42 et respectivement 46) dont la paroi (43 et respectivement 47) est ouverte sur l'un des côtés qui est tourné vers la surface d'appui (27 et respectivement 26) du corps de base (11), par l'intermédiaire d'une fente continue (44 et respectivement 48), de telle façon que l'excentrique associé (33 et respectivement 34) peut dépasser vers l'extérieur, au travers de ladite fente (44 et respectivement 48), avec un élément périphérique.

13. Outil d'usinage par enlèvement de copeaux selon la revendication 12, caractérisé en ce que la largeur de chacune des fentes (44 et respectivement 48) est inférieure à un angle périphérique de 180° et choisie de telle façon que l'excentrique associé (33 et respectivement 34) est maintenu de manière imperdable dans ladite fente, transversalement par rapport à l'alésage (42 et respectivement 46).

14. Outil d'usinage par enlèvement de copeaux selon l'une des revendications 1 à 13, caractérisé en ce que le support de plaquette (17) qui porte une plaquette de coupe (12) comporte, à distance du siège (18) pour la plaquette de coupe (12), un taraudage (30) de préférence incliné dans lequel s'engage une vis de serrage (29) pour la fixation du support de plaquette (17) sur le siège (24) du corps de base (11), ladite vis de serrage traversant un alésage de passage (28) dans le corps de base (11).

15. Outil d'usinage par enlèvement de copeaux selon la revendication 14, caractérisé en ce que la vis de serrage (29) s'engage à partir de la face arrière du support de plaquette (17) dans le taraudage (30) de celui-ci.

16. Outil d'usinage par enlèvement de copeaux selon l'une des revendications 1 à 15, caractérisé en ce que les deux excentriques (33, 34) s'étendent sensiblement orthogonalement l'un par rapport à l'autre, et que l'un des excentriques (33) comprenant la rainure (51) est orienté sensiblement dans le sens radial par rapport à l'axe longitudinal médian du corps de base (11) et maintenu de manière imperdable au moyen de l'autre excentrique (34), contre l'action de la force centrifuge, et sert par exemple au réglage axial, tandis que l'autre excentrique (34) assure par exemple le réglage radial.
